# EUROPEAN PATENT APPLICATION

(11) **EP 3 578 336 A1**
(43) Date of publication of application: **11.12.2019**
(21) Application number: 19178476.8
(22) Date of filing: 05.06.2019
(51) Int. Cl.: B29C 49/42, B29C 49/06, B29C 49/28, B29C 49/64, B29L 31/00

(54) **PLANT FOR PROCESSING PREFORMS/BOTTLES**

(30) Priority: 05.06.2018 IT 201800006055
(71) Applicant: Lanfranchi S.r.l., 43044 Collecchio (Parma) (IT)
(72) Inventor: LANFRANCHI, Mario, 43044 Collecchio (PR) (IT)
(74) Representative: Fanzini, Valeriano

(57) **Abstract**

A plant for moving and processing preforms for the manufacturing and movement of bottles, comprising a circuit connecting a sequence of treatment units, comprising at least one oven, a blower and/or a filling machine and/or a capping machine, said circuit being characterized in that it comprises a plurality of movement carriages supporting a respective apparatus for the gripping of preforms/bottles, said carriages being moved in particular by linear motors, and wherein said circuit connects by a continuous path said treatment units, said movement carriages being configured to transfer the preforms/bottles from a treatment unit to the next one.

## Description

### FIELD OF APPLICATION OF THE INVENTION

The present finding is in the field of plants that, starting from a preform, make the bottle, which is then filled and packaged.

Said plants generally provide for a passage into different machines, such as, for example, oven, blower, buffer, filling machine, capping machine, labelling machine, palletizer, etc.

Said machines are arranged in series, and connected by conveyor belts, which transfer the containers from a treatment station to the next one.

### STATE OF THE ART

Plants for manufacturing and processing bottles starting from a preform until arriving to the filled and optionally packaged bottle are known from the state of the art.

These are generally plants also referred to as complete processing lines for the manufacture of bottles, or, more generally, containers, by this meaning both the initial preform and the end bottle. Said bottles can have reduced dimensions (0,25 L) up to large dimensions (40 L), also including those bottles having a wide mouth. The processed containers are generally made of materials such as: PET, OPP, PLA, and Multilayer.

These bottles are obtained starting from a preform obtained by injection into a mould; the initial preform and the end bottle have only the neck in common.

The processing machines or units composing the plant are referred to by the general name of the processing step that is carried out therein. For each machine, there are different types of configuration, the selection of which may depend on the type of container to be processed, or the production rate.

For example, the blower that can be part of the plant may be of the linear or rotating type, such as the filling machine. Similarly, the labelling machine or the capping machine can be of a different type, as a function of the type of intended packaging, and always as a function of the rate.

In the same manner, the conveyor belts that transfer the containers from a treatment station to the next one has to be dimensioned as a function of the production rate of the line.

Almost all the machines composing the plant need to receive the containers from the input conveyor at a precise pitch, i.e., at a distance that is predetermined and defined by the configuration of the same machine in which they have to be processed. Therefore, the linear or rotating blower, for example, needs to receive the preforms at such a distance as to mirror the pitch of the forming moulds. The same apply to the filling machine, the containers pitch of which will be defined by the number and the pitch of the filling nozzles, etc.

Due to this reason, in input to each machine transferring devices for the adjustment of the pitch of the containers are generally provided.

For example, translating devices that are provided with gripping systems, which withdraw the containers from the conveyor, spacing them apart to the required pitch, or screws, which space the containers apart up to the required pitch, or also rotating devices such as wrenches, where a plurality of recesses are configured to receive a container at a given distance from the preceding/following one can be used.

All these devices are expensive, and often dedicated to the format of the container that is being processed. Therefore, it is necessary to contemplate the substitution of the equipment of these devices during the format change, in order to conform to the dimensions of the new container.

Furthermore, it shall be understood that, during the several passages of the containers from the conveyor belt in input, to the transferring device, from the transferring device to the machine, and subsequently from the machine to the conveyor belt in output, problems of fall, or jam of the container can occur, such as to also cause the stop of the machine or the temporary reduction of the rate. In all the ways, these steps involve cycles with "down-times" affecting the production rate of the entire line.

Furthermore, these plants, since they have to process containers that are very different in terms of dimensions, weight, and configuration, shall provide conveyor belts of different types, for example, chain belts, air belts, suctioned belts, etc.

Therefore, different conveyors with different movement technologies that are not unified, hence necessarily more expensive, both in terms of provision and management, can be present in the same plant.

Furthermore, the costs and times for changing the format are also very expensive.

### DISCLOSURE AND ADVANTAGES OF THE FINDING

The technical problem underlying the present invention is to provide a plant for moving and processing preforms for manufacturing, moving, and packaging bottles, which is structurally and functionally devised to overcome one or more of the limitations set forth above with reference to the mentioned prior art.

Within the scope of the above-mentioned problem, a main object of the invention is to develop a plant comprising a circuit connecting a sequence of treatment units, including at least one oven, a blower and/or a filling machine and/or a capping machine, in order to optimize the plant by unifying the type of conveyors and devices for gripping and moving preforms/bottles and for increasing the production rate thereof.

An object of the present invention is also to optimize the change of the format, making it completely automated, thus extremely rapid.

A further object of the invention is also to provide to the art a device for gripping and moving preforms/bottles, which is applicable in a plant, within the scope of a rational, simple solution.

Such and other objects are achieved by virtue of the characteristics of the invention as set forth in the independent claims. The dependent claims outline preferred and/or particularly advantageous aspects of the invention.

In particular, an implementation form of the present invention provides a plant for moving and processing preforms for manufacturing, moving, and packaging bottles, comprising a circuit connecting a sequence of treatment units, including at least one oven, a linear blowing machine and/or a filling machine and/or a capping machine, said circuit comprising a plurality of movement carriages supporting a respective gripping apparatus of preforms/bottles; said carriages are moved by linear motors, along the circuit that connects, by a continuous path, the treatment units. The movement carriages are configured to transfer the preforms/bottles from a treatment unit to the next one.

By virtue of this solution a simpler, more functional plant can be achieved, where the transferring devices for adjusting the pitch of the containers, which are generally provided for in input to each treatment unit can be eliminated.

By virtue of the use of the linear motors, in fact, there is the advantage to be able to adjust the distance between a gripping apparatus and the other one as a function of the dimensions of the preform/bottle, thus optimizing not only the format change, but also the build-up of the containers.

A first embodiment provides that the plant for moving and processing preforms for the manufacturing and movement of bottles is configured to enter the single treatment units and support the preform/bottle during the treatment, always keeping the grip thereon.

By virtue of this solution, an increase in the production rate of the plant is provided for, which is due to both the use of linear motors, and the fact of never releasing the preform/bottle, which therefore always remains held by the gripping apparatus during all the operative steps of the several productive units composing the plant.

A second implementation form of the present invention also provides a further plant for moving and processing preforms for the manufacture of bottles, where one or more of the treatment units may comprise a support device configured to cooperate with the gripping apparatus during the treating step of the preform/bottle.

By virtue of this solution, the gripping apparatus can be obtained in a simpler manner.

In accordance with a third alternative implementation form of the present invention, it provides a plant where at least one treatment unit may comprise an operating station configured to receive the preform/bottle, take it on during the treatment step and to subsequently release it again to the gripping apparatus, once the treatment step is completed.

In this third embodiment the gripping apparatus could not keep the grip on the preform/bottle in all the treatment units, but it can release it to the operating station of the treatment unit.

The advantages of this further embodiment are due to the fact that the gripping apparatus turns out to be very simple, lightweight, and not expensive, since it can be configured to hold only the preforms/bottle.

In a preferred embodiment, in fact, the gripping apparatus comprises one or more upper mobile members and one or more lower mobile members, where the upper mobile members are configured to close on a neck portion of a preform/bottle and hold it above a ring, while the lower mobile members are configured to close and hold the preform/bottle under the ring.

A further aspect of the finding provides that the upper mobile members and the lower mobile members are configured to alternately close.

By virtue of this solution, it is possible to activate at each station the mobile member that is more suitable to the productive unit in which the preform/bottle is being processed, in order to avoid interferences with the components of the same unit.

In such a manner, the gripping apparatus can keep the grip on the preform/bottle.

Such an object to never release the preform/bottle is further ensured also by the fact that the gripping apparatus has preferably a through opening defined in the mobile members to allow a fluid passage into the preform through the mouth thereof. In fact, the through opening allows, for example, the passage of air into the blowing machine liquid into the filling machine.

The gripping apparatus may also be rotatable according to an axis substantially coincident with the axis of symmetry of the preform/bottle that is being held. By virtue of this solution the preform/bottle remains gripped also into the productive units in which the rotation of the same preform/bottle is required, such as, for example in the oven or the labelling machine.

Object of the present invention is also to adapt the gripping device to the different dimensions of the neck for an automatization of the format change.

In fact, an aspect of the finding further provides that the gripping apparatus comprises an actuating device of the upper and lower mobile members to drive the opening/closure thereof on the neck of the preform/bottle; said actuating device is preferably configured to carry out the opening/closure of the mobile members of the gripping apparatus in a plurality of configurations to allow varying the opening/closure dimension as a function of the diameter of the neck of the preform/bottle.

A possible embodiment provides that the actuating device comprises a driving member configured to receive an activation signal provided by an activation station of the plant and such that the actuating device is of a non-reversible type.

Therefore the opening/closure position of the mobile member of the gripping device is held up to the next activation station of the plant.

An alternative to said embodiment provides that the actuating device comprises a driving member configured to autonomously activate itself by an activation signal provided by a programmable control unit and without having to interface with an activation station. Therefore, the opening/closure of the mobile members can be carried out in any point of the plant.

Said objects and advantages are all achieved by the plant for moving and processing preforms for manufacturing, moving, and packaging bottles, which is the subject matter of the present finding, that is characterized in what is provided for in the claims set forth herein below.

### BRIEF DESCRIPTION OF THE FIGURES

This and other characteristics will be more clearly explained by the following description of some embodiments that are illustrated by way of non-limiting example in the attached drawing tables.
- Fig. 1: illustrates an example of circuit of the processing plant for the manufacturing of filled bottles starting from preforms according to the first and second embodiments of the apparatus.

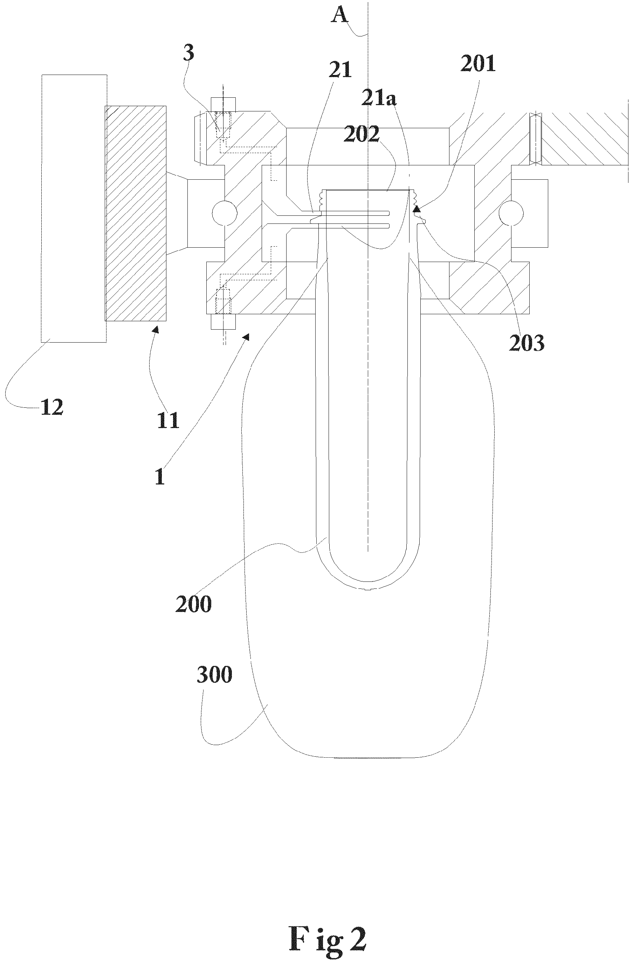

- Fig. 2: illustrates a sectional view of an apparatus for gripping and moving preforms and/or bottles.

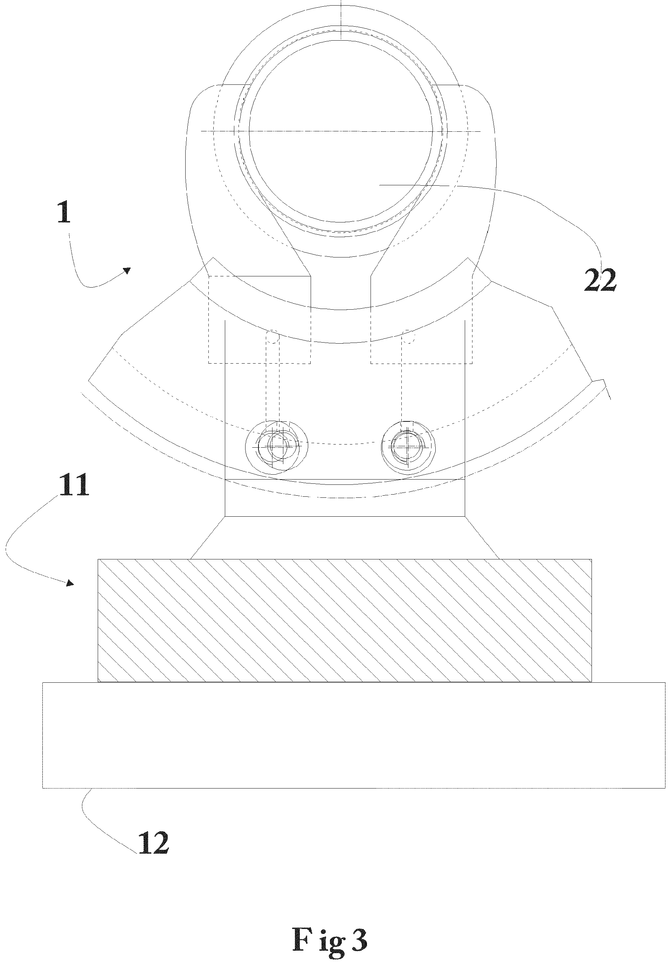

- Fig. 3: illustrates a plan view of an apparatus for gripping and moving preforms and/or bottles.

### DESCRIPTION OF THE FINDING

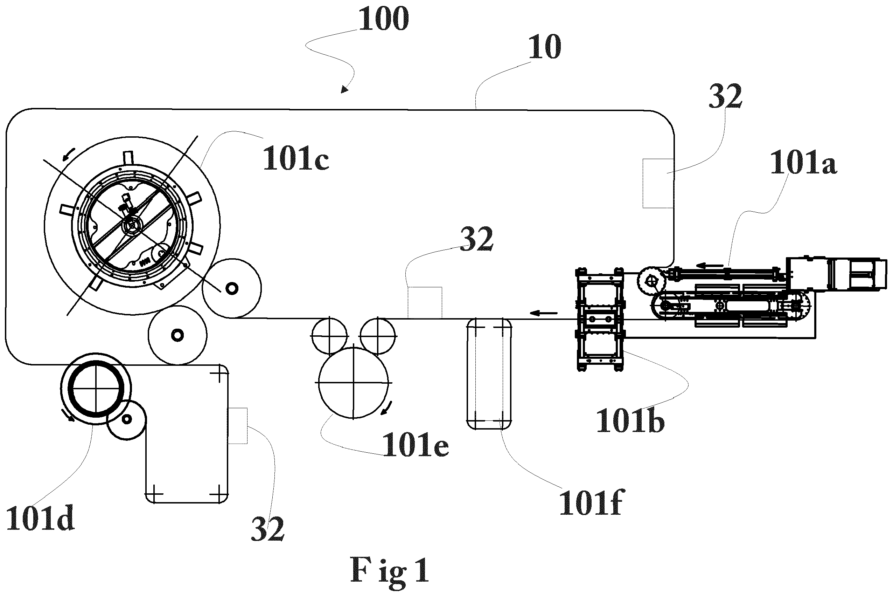

With particular reference to Fig. 1, a plant 100 for moving and processing preforms 200 for the manufacturing and movement of empty or filled bottles 300 is represented, comprising a circuit 10 connecting a sequence of treatment units 101, as represented in Fig. 1, of which preferably at least:
- an oven 101a
- a blower 101b
- and/or a filling machine 101c,
- and/or a capping machine 101d,

Furthermore, the plant 100 could also comprise
- labelling machine 101e,
- buffer for building-up the bottles 101f,
- palletizer or bundling machine, or case packer, not represented in the figure.

This is an exemplary, non-limiting list of the possible machines or treatment units that may compose a plant 100, i.e. a complete line for processing bottles, from the preform 200 up to the filled bottle 300 that is labelled and packaged directly on a pallet or by a secondary packaging, such as bundles, or boxes/cartons.

By the sake of description, by the term of treatment unit 101 any of the machines listed above, or other ones that may be part of the plant 100 will be generally referred to.

The circuit 10 of the plant 100 connects the several treatment units 101 in order to supply them in input with the preforms/bottles and to transfer the exiting product to the next treatment unit 101.

According to an aspect of the finding, said circuit 10 comprises a plurality of linear motors 12 adapted to move the preforms/bottles from a treatment unit 101 to the next one.

The linear motors commercially available generally comprise a mobile magnet or cursor housing the electrically supplied coils and a linear sequence of magnetic plates or fixed permanent magnets. The mobile magnet is positioned above said linear sequence of magnetic plates with an alternated polarity so that the mobile magnet is always in such a position as to be attracted by the subsequent magnet, in the motion direction, and repelled by the preceding one.

Generally, the advantages of the linear motors in the implementation of moving systems are mainly related to the fact that, besides being low inertia devices, the linear motors do not need coupling/reduction/motion transmission systems such as belts, chains, or the like, but they are controlled directly by their own drive, constituting a direct actuation with easy management and maintenance.

Therefore, inertial phenomena are almost absent, which are instead characteristic of the mechanics of transmission of the motion with a conventional rotation motor, which involves, over time, problems of wear and loss of precision. Furthermore, by virtue of the linear motors, it is possible to reach high speeds and strong accelerations, which considerably increase productivity, thus allowing considerable cycle time savings.

In the following of the description, the terms carriage 11 and linear motor 12 will be used to define the mobile magnet and the linear sequence of fixed magnetic plates, respectively.

In accordance with a characteristic of the present finding, del the linear motor or the linear motors 12 extend along the circuit 10 defining the path of the preforms 200 and/or the bottles 300.

Since the magnetic plates are generally modular, they allow a great flexibility in manufacturing the circuit 10.

According to a preferred embodiment, the circuit 10 comprises a plurality of movement carriages 11 supporting a respective gripping apparatus 1 of preforms/bottles 200, 300.

An aspect of the finding provides that said movement carriages 11 are configured to transfer the preforms/bottles 200, 300 from a treatment unit 101 to the next one.

By virtue of the intrinsical characteristics of the linear motors 12, there is not a fixed pitch between a carriage 11, hence between an apparatus 1 and the preceding or following one, but this pitch automatically conforms to the pitch required by the single treatment units 101.

By virtue of this solution, the transferring devices for adjusting the pitch of the containers that are generally provided for in input to the treatment units 101 are not necessary in the plant 100.

By virtue of the use of the linear motors, what is normally used in the prior art can be eliminated, such as, for example: translating devices that withdraw the containers in input to the treatment unit 101, spacing them apart at the required pitch, or screws that space the containers apart up to the required pitch, or also rotating devices, such as wrenches, where a plurality of recesses are configured to receive a container at a given distance from the preceding/following one.

Beside to the costs that the above-mentioned devices involve, they also have the problem to be often dedicated to the format of the container which is being processed. Therefore, it is necessary to provide for a substitution of the equipment of these devices during the change of the format in order to adjust to the dimensions of the new container.

Furthermore, by virtue of the use of the linear motors, there is the advantage to be able to adjust the distance between an apparatus 1 and another one as a function of the dimensions of the preform/bottle 200, 300, thus optimizing not only the change of the format, but also the building-up of the containers.

In accordance with a first embodiment, the apparatus 1 supported by the respective carriage 11 is configured to enter the single treatment units 101 and support the preform/bottle (200, 300) during the treatment.

By virtue of this embodiment, the apparatus 1 never releases the preform/bottle 200, 300, which, therefore, remains always held by the apparatus 1 even during the treatment steps.

The linear motor 12 and the respective carriage 11 supporting the apparatus 1 are configured not only to transfer the preforms/bottles 200, 300 from a treatment unit 101 to the next one, but they can enter the productive units 101.

Therefore, the apparatus 1 will be configured to interface with the operative members of the several treatment units 101, such as, for example, the seal of a blowing machine 101b, or the nozzle of a filling machine 101c, or the capping device of a capping machine 101d, etc.

In this manner, the following steps are eliminated:
- in input to the treatment unit 101, opening of the gripping apparatus 1 and release of the preform/bottle 200, 300 to a transferring and/or processing device,
- in output from the treatment unit 101, withdrawal of the preform/bottle 200, 300 from a transferring and/or processing device, closure of the gripping apparatus 1 for the transfer to the next treatment unit 101.

By virtue of this solution, an increase in the production rate of the treatment units 101 is provided for, eliminating the down-times due to the transfer of the preform/bottle 200, 300.

Advantageously, tenth of a second are regained, which increases the rate of the line.

Furthermore, the problems generated by the passage of the preforms/bottles 200, 300 between a gripping organ and the other one, such as falls or jams, are reduced.

In a second embodiment, one or more of the treatment units 101 may comprise a support device, not represented in the figure, and configured to cooperate with the apparatus 1 during the treating step of the preform/bottle 200, 300.

Also in this second embodiment, the linear motor 12 and the respective carriage 11 supporting the apparatus 1 can enter the productive units 101.

Furthermore, the support device can be configured to cooperate also with the carriage 11 supporting the apparatus 1 involved in the operative treatment step of the preform/bottle 200, 300.

By virtue of this solution, the apparatus 1 can be obtained in a simpler manner with respect to that of the first embodiment. In fact, in said first embodiment the apparatus 1, since it has to be suitable for moving and supporting the preform/bottle 200, 300 in all the treatment units 101, could turn out to be mechanically complex, since it shall be configured to interface with the seal and the forming mould of the blower 101b, or, furthermore, with the filling nozzle of the filling machine 101c, or with the capping device of a capping machine 101d, or it shall support also the weight of the filled bottle 300 etc. Similarly, said apparatus 1 shall be sufficiently dimensioned as to support the forces acting in the treatment units 101 that have heavier working cycles.

By virtue of this second embodiment, which provides, inside some treatment units 101 for the presence of support devices, it is instead possible to reduce the complexity and the mechanical overdimensioning of said apparatus 1.

Similarly, also in this second embodiment the preform/bottle 200, 300 is never released, instead, it always remains held by the apparatus 1, allowing reducing the problems generated by the passage of the preforms/bottles 200, 300 between a gripping organ and the other one, such as falls or jams.

Also in this second solution, an increase in the production rate of the treatment units 101 is provided for, eliminating the down-times due to the transfer of the preform/bottle 200, 300.

In accordance with a possible third alternative embodiment, at least one treatment unit 101 may comprise an operating station 110, not represented in the figure, which is configured to receive the preform/bottle 200, 300 from the apparatus 1 and configured to take on said preform/bottle 200,300 during the treatment step and to subsequently release it again to the apparatus 1, once the treatment step is completed.

In this third embodiment, the apparatus 1 could not be able to keep the grip on the preform/bottle 200, 300, in all the treatment units 101, but it can release it to the operating station 110 of the treatment unit 101.

In the contrary, the advantages of this third embodiment are due to the fact that the apparatus 1 will be very simple, lightweight, and not expensive, since it can be configured only to hold the preforms/bottle 200, 300.

By virtue of this third embodiment, also the dimensioning of the carriages 11 of the linear motors 12, is optimized, since the loads acting on said carriages 11 are considerably lower.

As a function of the embodiments described above, different configurations of the gripping apparatus 1 could be required.

As it will be set forth in more detail herein below, the gripping apparatus 1 can be configured to hold the preform/bottle 200, 300 in different manners.

It is pointed out that the preform 200 and the bottle 300 have the neck 201 in common. By the term neck 201 is meant that portion of preform/bottle 200, 300 comprised between a mouth 202, i.e., the opening of the preform/bottle 200, 300, up to under a ring 203, i.e., a ring generally having a diameter that is larger than the neck.

Therefore, the gripping apparatus 1 may hold the preform/bottle on the neck 201 or on a portion thereof, according to the following possible configurations:
a) the gripping apparatus 1 provides for holding the preform/bottle 200, 300 in a neck portion 201, above the ring 203;
b) the gripping apparatus 1 provides for holding the preform/bottle 200, 300 in a neck portion 201, under the ring 203;

The gripping apparatus 1 may provide for holding the preform/bottle 200, 300 simultaneously or alternately in the neck portion 201 above or under the ring 203.

The holding above the ring 203 cannot be used inside all the treatment units 101; for example, in the capping machine 101d the gripping apparatus 1 located above the ring 203 interferes with the screwing device.

In such a case, the transfer of the preform/bottle 200, 300 to an operating station 110 adapted to carry out the capping operation can be provided for.

Also a hold under the ring 203 cannot be used inside other treatment units 101; for example, in the blowing machine 101b the gripping apparatus 1 under the ring 203 interferes with the forming mould. In this case, the transfer of the preform/bottle 200, 300 to an operating station 110 adapted to carry out the blowing operation can be provided for.

Therefore, the double systems that allows holding the preform/bottle 200, 300 alternately above or under the ring 203 allows changing the holding position as a function of the operation to be carried out without releasing the preform/bottle 200, 300, and it is most preferably usable inside the treatment units 101. In this case, a support device with which the gripping apparatus 1 cooperates to be able to obtain a simpler, lighter, hence less expensive gripping apparatus 1 can be in any case provided for in the treatment units 101.

In accordance with the above-mentioned objects, the invention provides for a first constructive form, in which the gripping apparatus 1 comprises one or more upper mobile members 21 configured to close on a neck portion 201 of a preform/bottle 200, 300 and hold it between the mouth 202 and above the ring 203.

Furthermore, the gripping apparatus 1 may comprise one or more lower mobile members 21a configured to close on a neck portion 201 of a preform/bottle 200, 300 and to hold it under the ring 203.

The gripping apparatus 1 is configured to hold the preform/bottle 200, 300 with the lower mobile members 21a or with the upper mobile members 21, as a function of the treatment unit 101 in which the gripping apparatus 1 is operating.

The upper 21 and lower 21a mobile members can provide for different implementation forms, easily definable by those skilled in the art.

In particular said mobile members 21 and 21a can be composed of a single mobile member with an opening that is shrinkable by a rotation about a fulcrum.

However, what has been described has only a non-limiting, exemplary value, therefore any variations which may provide, for example, a stationary and a mobile member, or two distinct mobile members with a translational movement, are considered henceforth falling within the same protection scope.

In a formulation of the present finding, the apparatus 1 further comprises an actuating device 3 of said mobile members 21, 21a to drive the opening/closure thereof on the neck 201.

Said actuating device 3 can be of a pneumatic, electrical-mechanical, hydraulic type, etc.

A possible embodiment provides that the actuating device 3 is always connected to the energy source that causes its activation, i.e., electrical, pneumatic, or hydraulic energy along the entire circuit 10 of the plant 100.

Therefore, the opening/closure of the mobile members 21, 21a can be carried out in any position of the plant 100, since the actuating device 3 is configured to activate itself by an activation signal provided by a programmable control unit.

In accordance with a possible alternative embodiment, the actuating device 3 comprises a driving member 31, which is configured to receive an activation signal provided by an activation station 32 of the plant 100.

This embodiment provides that, in the moment when the apparatus 1 interfaces with said activation station 32, the latter transmits a signal to the driving member 31 in order to actuate the pneumatic/electrical/hydraulic connection and to allow the status change of the actuating device 3 and consequently the opening/closure of the mobile members 21, 21a.

In accordance with a characteristic of the present finding, the actuating device 3 is of a non-reversible type.

By virtue of such configuration, the mobile members 21 remain in the opening/closure position defined by the signal that the activation station 32 transmits to the driving member 31, and they can change their opening/closure status only by interfacing with said activation station 32.

In fact, this configuration provides that the actuating device 3 is connected to the energy source that generates the activation thereof, i.e., electrical, pneumatic or hydraulic energy, only when it interfaces with the activation station 32.

To this aim, safety members, such as check valves or mechanical stops, which prevent an uncontrolled opening, can also be provided.

In accordance with an aspect of the invention, the actuating device 3 is configured to carry out the opening/closure of the mobile member 21, 21a of the gripping apparatus 1 in a plurality of configurations to allow varying the opening/closure dimension as a function of the diameter of the neck 201 of the preform/bottle 200, 300.

By virtue of this solution, the format change is optimized when the preforms 200 to be treated have necks 201 having different dimensions.

In fact, this allows automatically adapting the dimension of the gripping apparatus 1 to the dimension of the neck 201. Said automatic adjusting can occur in different manners, such as, for example, by means of a recipe inserted into a control unit, which manages the actuating device 3, or directly by means of a torque control of the actuating device 3, in particular if it is of the electrical type, or by controlling the pressure, if it is of the pneumatic or hydraulic type. However, it is understood that said examples do not limit the possible solutions that those skilled in the art may identify.

According to an aspect of the finding, the gripping apparatus 1 has a through opening 22 defined in said one or more mobile members 21 and 21a to allow a fluid passage into the preform 200 through the mouth thereof 202.

Furthermore, the through opening 22 defined in said one or more mobile members 21, 21a allows not to release the preform/bottle 200, 300 during the blowing or filling steps into the respective treatment units 101, such as the blowing machine 101b or the filling machine 101c.

In fact, said through opening 22 can be configured both to interface with the blowing seal and to allow the passage of air into the preform 200 through the mouth thereof 202, and to interface with the filling nozzle and allow to the passage of the liquid into the bottle 300 through the mouth thereof 202.

Exactly in order to allow interfacing with the several treatment units 101, said finding provides that the linear motor 12 and the respective carriage 11 supporting the apparatus 1 are preferably located laterally to the preform/bottle 200, 300.

In such a manner, the linear motor 12 and the respective carriage 11 do not interfere for example with the seal of the blower 101b and they allow access to the mouth 202 of the preform/bottle 200, 300 for the blowing. The same applies for example to the filling machine 101c or the capping machine 101d.

Similarly, the side position also allows leaving a free space below the preform/bottle 200, 300 so as not to interfere with the mould of the blower 101b or with the size of other treatment units 101.

Therefore, the complete access and function of the apparatus 1 in the blower 101b and in the same manner in the other treatment units 101 are ensured.

The invention may further provide for a gripping apparatus 1 that is rotatable according to an axis A substantially coincident with the axis of symmetry of the preform/bottle 200, 300 that is being held.

The gripping apparatus 1 can be put in rotation when needed. In particular, this rotation may preferably occur, for example, inside a treatment unit 101, such as an oven, to allow a heating uniformity of the preform 200, or a labelling machine, to allow the application of the label to the bottle 300.

However, it is intended that what has been described above is of a non-limiting, exemplary value; therefore, any detail variations that would be necessary due to technical and/or functional reasons are as of now considered to fall within the same protection scope defined by the claims set forth herein below.

## Claims

1. A plant (100) for moving and processing preforms (200) for the manufacturing and movement of bottles (300), comprising a circuit (10) connecting a sequence of treatment units (101), comprising at least one oven (101a), a blower (101b) and/or a filling machine (101c) and/or a capping machine (101d), said circuit (10) being **characterized in that** it comprises a plurality of movement carriages (11) supporting a respective apparatus (1) for the gripping of preforms/bottles (200,300), said carriages (11) being moved in particular by linear motors (12), and wherein said circuit (10) connects by a continuous path said treatment units (101), said movement carriages (11) being configured to transfer the preforms/bottles (200, 300) from a treatment unit (101) to the next one.

2. The plant (100) for moving and processing preforms (200) for the manufacturing and movement of bottles (300) according to claim 1 wherein the gripping apparatus (1) is configured to always keep the grip on the transported preform/bottle (200, 300) while entering the single treatment units (101) and supporting the preform/bottle (200, 300) during the treatment.

3. The plant (100) for moving and processing preforms (200) for the manufacturing and movement of bottles (300) according to claim 1 or 2, wherein at least one treatment unit (101) comprises a support device configured to cooperate with the gripping apparatus (1) and/or the carriage (11) during the treating step of the preform/bottle (200, 300).

4. The plant (100) for moving and processing preforms (200) for the manufacturing and movement of bottles (300) according to claim 1 or 2, wherein at least one treatment unit (101) comprises an operating station (110) configured to receive the preform/bottle (200, 300) from the gripping apparatus (1) and to take on said preform/bottle (200,300) during the treatment step and to subsequently release it to the gripping apparatus (1) once the treatment step is completed.

5. The plant (100) for moving and processing preforms (200) for the manufacturing and movement of bottles (300) according to one of the preceding claims, wherein the gripping apparatus (1) comprises one or more upper mobile members (21) configured to close on a neck portion (201) of a preform/bottle (200,300) and hold it between a mouth (202) and over a ring (203).

6. The plant (100) for moving and processing preforms (200) for the manufacturing and movement of bottles (300) according to one of the preceding claims, wherein the gripping apparatus (1) comprises one or more lower mobile members (21a) configured to close and hold the preform/bottle (200, 300) under the ring (203).

7. The plant (100) for moving and processing preforms (200) for the manufacturing and movement of bottles (300) according to claim 5 or 6, wherein the gripping apparatus (1) comprises both upper mobile members (21) and lower mobile members (21a) configured to alternately close.

8. The plant (100) for moving and processing preforms (200) for the manufacturing and movement of bottles (300) according to one of claims 5 to 7, wherein the gripping apparatus (1) further comprises an actuating device (3) of said upper (21) and/or lower (21a) mobile members to drive the opening/closure thereof on a neck portion (201).

9. The plant (100) for moving and processing preforms (200) for the manufacturing and movement of bottles (300) according to claim 8, wherein the actuating device (3) comprises a driving member (31) configured to receive an activation signal provided by an activation station (32) of the treatment unit (101) in which the gripping apparatus (1) is operating.

10. The plant (100) for moving and processing preforms (200) for the manufacturing and movement of bottles (300) according to one of claims 8 to 9, wherein the actuating device (3) is of a non-reversible type.

11. The plant (100) for moving and processing preforms (200) for the manufacturing and movement of bottles (300) according to one of claims 8 to 10, wherein the actuation (3) is configured to carry out the opening/closure of the upper (21) and/or lower (21a) mobile members of the gripping apparatus (1), which is mobile in a plurality of configurations to allow varying the opening/closure dimension as a function of the diameter of the neck (201) of the preform/bottle (200,300).

12. The plant (100) for moving and processing preforms (200) for the manufacturing and movement of bottles (300) according to one of the preceding claims, wherein the gripping apparatus (1) has a through opening (22) defined in said one or more upper (21) and/or lower (21a) mobile members to allow a fluid passage into the preform (200) through the mouth (202) thereof.

13. The plant (100) for moving and processing preforms (200) for the manufacturing and movement of bottles (300) according to one of the preceding claims, wherein the linear motor (12) and the respective carriage (11) are located laterally to the preform/bottle (200,300) so as to leave a free space over and under said preform/bottle (200,300).

14. The plant (100) for moving and processing preforms (200) for the manufacturing and movement of bottles (300) according to one of the preceding claims, wherein the gripping apparatus (1) is rotatable according to an axis (A) substantially coincident with the axis of symmetry of the preform/bottle (200,300) that is being held.
